# EUROPEAN PATENT APPLICATION

(11) **EP 2 960 776 A2**
(43) Date of publication of application: **30.12.2015**
(21) Application number: 15172340.0
(22) Date of filing: 16.06.2015
(51) Int. Cl.: G06F 3/0489, G06F 3/023, G06F 3/0488, G06F 1/16, G06F 3/0354

(54) **ELECTRONIC APPARATUS AND OPERATING METHOD THEREOF**

(30) Priority: 23.06.2014 JP 2014128130
(71) Applicant: Fujifilm Corporation, Minato-ku Tokyo 106-8620 (JP)
(72) Inventor: NAKAMURA, Samito, Tokyo, 107-0052 (JP); HARA, Toshita, Tokyo, 107-0052 (JP); SHINKAI, Yasuhiro, Tokyo, 107-0052 (JP)
(74) Representative: Klunker . Schmitt-Nilson . Hirsch

(57) **Abstract**

A tablet terminal (10) comprises a touch panel (12) which functions as a display for displaying a screen on a front face of a main body (11), a touch sensor (31, 231) provided at a back or a side face of the main body of the tablet terminal (10), and a controller (44) which detects a contact to the touch sensor (31) using a contact detection signal which the touch sensor outputs and executes control assigned to a point where the contact is detected after the point where the contact is detected is changed to a non-contact state.

## Description

### BACKGROUND OF THE INVENTION

### 1. Field of the invention

The present invention relates to an electronic apparatus having a touch sensor.

### 2. Description Related to the Prior Art

There has been increasing cases an electronic apparatus is provided with a touch panel as an user interface, since it enables an intuitive operation and is easy to use. Especially in the late years, portable electronic apparatuses such as smartphones and tablet terminals to be operated through the touch panel are widespread. The touch panel comprises a display having a screen on which a graphical user interface (hereinafter referred to as GUI) such as an icon, a button and a menu and so on are displayed, and a touch sensor which is provided on the screen, transmits a display on the screen and detects a contact to the display. The electronic apparatus with the touch panel detects a touch (contact) to the icon or the like displayed on the display by a contact detection sensor, and executes control assigned to the touched icon or the like. For example, in the smartphone and the tablet terminal, a software keyboard is displayed on the display in case character input is required, so that a user enters characters by touching software keys.

As described above, the touch panel is the UI provided with the contact detection sensor on the screen of the display. In addition, there is an electronic apparatus using an contact detection sensor without transmission of the screen as the UI (it is called touch sensor, touch pad, or the like. Hereinafter it is referred to as the touch sensor). Furthermore, it is known an electronic apparatus comprising the touch sensor in addition to the touch panel. For example, the electronic apparatus with the touch panel disclosed in Japanese Patent Laid-Open Publication No. 2010-257163 and Japanese Patent Laid-Open Publication No. 2013-196598 further comprises the touch sensor on a back face (the counter side face from the face on which the screen of the display is displayed) of the electronic apparatus. Key entry is able to be performed by touching the back face of the electronic apparatus.

In the electronic apparatus having the touch panel, usually the touch panel covers almost whole of one face of the electronic apparatus, to maximize the display area. In case a hand or a finger holding the electronic apparatus is on the touch panel, the screen may become substantially small and may execute operation not intended. Therefore, the electronic apparatus having the touch panel is held not at the screen (the touch panel), but mainly at the side face and the back face, or edges outside the touch panel.

Like the electronic apparatus with the touch panel disclosed in Japanese Patent Laid-Open Publication No. 2010-257163 and Japanese Patent Laid-Open Publication No. 2013-196598, in case the touch panel is provided on the front face and the touch sensor is provided on the back face of the electronic apparatus, a hand or a finger which holds the electronic apparatus is almost always on the touch sensor at the back face, for avoiding a contact on the touch panel serving as the screen, since the touch panel and the touch sensor are the device for detecting a contact of a hand or a finger, control that is assigned to a contact point may be executed when a contact to the contact point is detected, even if the contact is intended for holding the electronic apparatus. In other words, there may become a case that the electronic apparatus executes an operation which is not intended, in response to the contact to the touch sensor at the back face which occurred by just holding the electronic apparatus. As a result, convenience of the apparatus may be rather spoiled though the touch sensor is additionally provided at the back face for convenience. Such a problem may be occurred even in case the touch sensor is provided at the side face of the electronic apparatus, in addition to the touch panel at the front face.

### SUMMARY OF THE INVENTION

An object of the present invention is to provide an electronic apparatus and an operation method thereof which prevent malfunction of the electronic apparatus caused by a touch sensor provided at the back face or the side face of the apparatus and is easy to use.

To achieve the above and other objects, an electronic apparatus of the present invention comprises a display which displays a screen on a front face of a main body, a touch sensor provided at a back face or a side face of the main body, and a controller which detects a contact to the touch sensor using a contact detection signal which the touch sensor outputs and executes control assigned to a point where the contact is detected after the point where the contact is detected is changed to a non-contact state.

It is preferable that the controller detects contacts to plural points of the touch sensor, and executes control assigned to the point where the non-contact state is detected after at least one of the points is changed to the non-contact state.

It is preferable that the controller executes control assigned to the point where the non-contact state is detected after at least one of the points where the contact is detected is changed to the non-contact state while the other points is kept in the contact state.

It is preferable that the touch sensor includes a recessed part or a projecting part to which control is assigned.

It is preferable that the touch sensor has the plurality of recessed parts or projecting parts, and provides an identification part to identify a reference position to at least one of the recessed parts or projecting parts.

It is preferable that the touch sensor includes the plurality of recessed parts or projecting parts to which one hand or finger which holds the main body contacts and the plurality of recessed parts or projecting parts to which another hand or finger which holds the main body contacts, wherein at least one of the recessed parts or projecting parts to which one hand or finger contacts is provided with the identification part and at least one of the recessed parts or projecting parts to which another hand or finger contacts is provided with the identification part.

It is preferable that the touch sensor has the plurality of recessed parts or projecting parts which are arranged in a curved line projecting or recessed from a side face of the main body toward the center of the touch sensor.

It is preferable that the controller executes input control of a letter or symbol.

It is preferable that the controller controls the display to display a graphical user interface indicating control to be executed.

It is preferable that the controller notices through the graphical user interface that control assigned to the contacted point is executable, after detecting a contact to the touch sensor.

An operation method of an electronic apparatus of the present invention, in which the electronic apparatus has a display which displays a screen on a front face of a main body and a touch sensor provided at a back face or a side face of the main body, comprises steps of detecting a contact to the touch sensor using a contact detection signal which the touch sensor outputs and executing control assigned to a point where the contact is detected after the point where the contact is detected is changed to a non-contact state.

According to the present invention, since a contact to the touch sensor at the back face or the side face is detected and control assigned to a point where the contact is detected is executed after the point where the contact is detected is changed to a non-contact state, the electronic apparatus which prevents malfunction caused by the touch sensor provided at the back face or the side face, where a contact cannot be avoided to hold the electronic apparatus, can be provided.

### BRIEF DESCRIPTION OF THE DRAWINGS

The above and other objects and advantages of the present invention will be more apparent from the following detailed description of the preferred embodiments when read in connection with the accompanied drawings, wherein like reference numerals designate like or corresponding parts throughout the several views, and wherein:
Fig.1 is a front view of a tablet terminal;
Fig.2 is a schematic diagram indicating a constitution of a touch panel;
Fig.3 is a rear view of the tablet terminal;
Fig.4 is a schematic diagram indicating a constitution of a touch sensor at the back face of the tablet terminal;
Fig.5 is a block diagram indicating an electrical constitution of the tablet terminal;
Fig. 6 is a flow chart indicating an operation of the tablet terminal;
Fig.7 is a schematic diagram indicating a home screen;
Fig.8 is a schematic diagram indicating a screen when a search engine is opened through a web browser;
Fig.9 is a schematic diagram indicating a screen when an input box is activated;
Fig.10 is a schematic diagram indicating a state that recessed parts are touched by fingers of hands which hold the tablet terminal;
Fig.11 is a schematic diagram indicating a screen when the recessed parts are contacted;
Fig.12 is a schematic diagram indicating a movement of the index finger of the left hand;
Fig. 13 is a schematic diagram indicating a screen when the index finger of the left hand moved;
Fig.14 is a schematic diagram indicating a state that the index finger of the left hand is changed to a non-contact state with respect to the recessed part;
Fig. 15 is a schematic diagram indicating an operation when the index finger of the left hand is changed to a non-contact state with respect to the recessed part;
Fig.16 is a schematic diagram indicating a GUI of function keys;
Fig.17 is a front view of a smartphone;
Fig.18 is a rear view of the smartphone;
Fig.19 is a rear view of a smartphone having another arrangement of recessed parts; and
Fig.20 is a rear view of a smartphone having still another arrangement of recessed parts.

### DESCRIPTION OF THE PREFERRED EMBODIMENTS

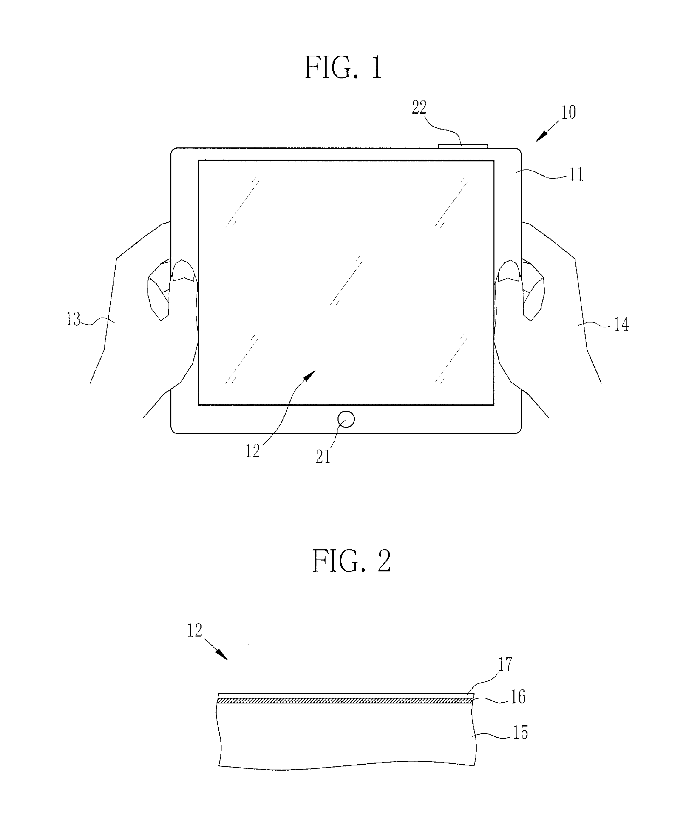

As illustrated in Fig.1, a tablet terminal 10 comprises a touch panel 12 which covers almost whole of one face of a main body 11 in the shape of a rectangular plate, and is used with being held by a left hand 13 and a right hand 14. As illustrated in Fig. 2, the touch panel 12 includes a display panel 15, a first sensor film 16 and a cover glass 17. The display panel 15 is for example a liquid crystal panel or an organic electroluminescence panel, and has a screen which displays an image, an operation screen of an application, a GUI such as an icon, a button and a menu for operating the tablet terminal 10, and so on. The first sensor film 16 is a contact detection sensor provided on a display area of the display panel 15. The cover glass 17 is provided on the first sensor film 16.

The touch panel 12 is of projection-capacitive type which enables multipoint detection. The first sensor film 16 is formed by laminating resin films, on which electrically-conductive patterns are formed by silver or copper, through an insulator such as an adhesive, so that a mesh-shaped electrically conductive pattern is formed. Since the first sensor film 16 and the cover glass 17 are transparent, a screen of the display panel 15 is displayed on the surface of the main body 11 through the first sensor film 16 and the cover glass 17. Therefore, the touch panel 12 constitutes both the display and the operation section.

Hereinafter, a face where the touch panel 12 is provided and a screen of the display panel 15 is displayed is referred to as the front face, side faces corresponding to the short sides of the front face are referred to as the right and left side faces, side faces corresponding to the long sides of the front face are referred to as the top face and bottom face, and a face at the opposite side to the front face with respect to the main body 11 is referred to as the back face.

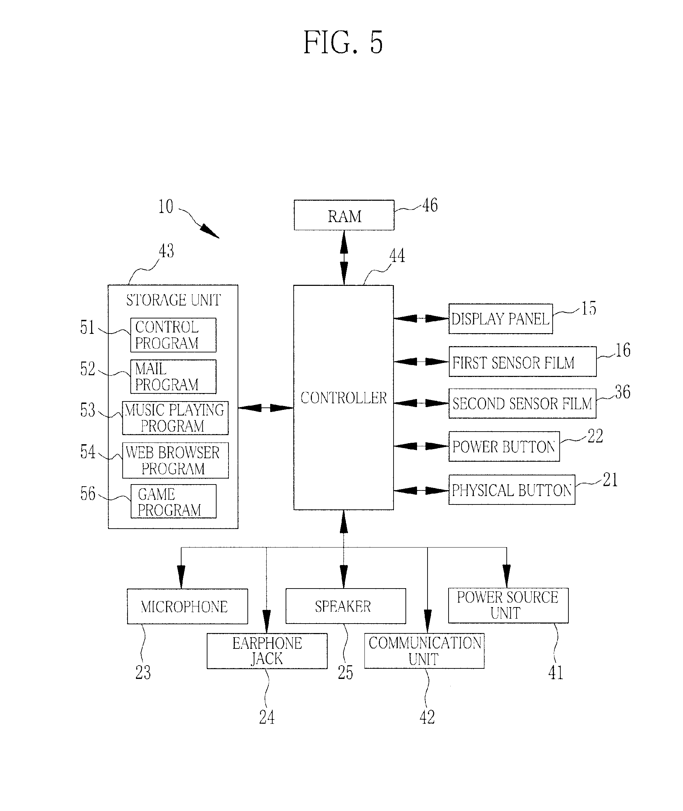

A physical button 21 is provided on the bottom face side of the front face of the main body 11. The physical button 21 is pressed for cancellation of sleep mode, stop of running application program (or shifting to background operation), and so on. On the top face of the main body 11, a power button 22 is provided for ON/OFF of a power source of the tablet terminal 10, cancellation of the sleep mode, and so on. In addition, the tablet terminal 10 has a microphone 23 for inputting a sound, an earphone jack 24 for outputting a sound signal to an earphone, a speaker 25 for outputting a sound (these are illustrated in Fig.5) and so forth on the top, bottom or side faces of the main body 11.

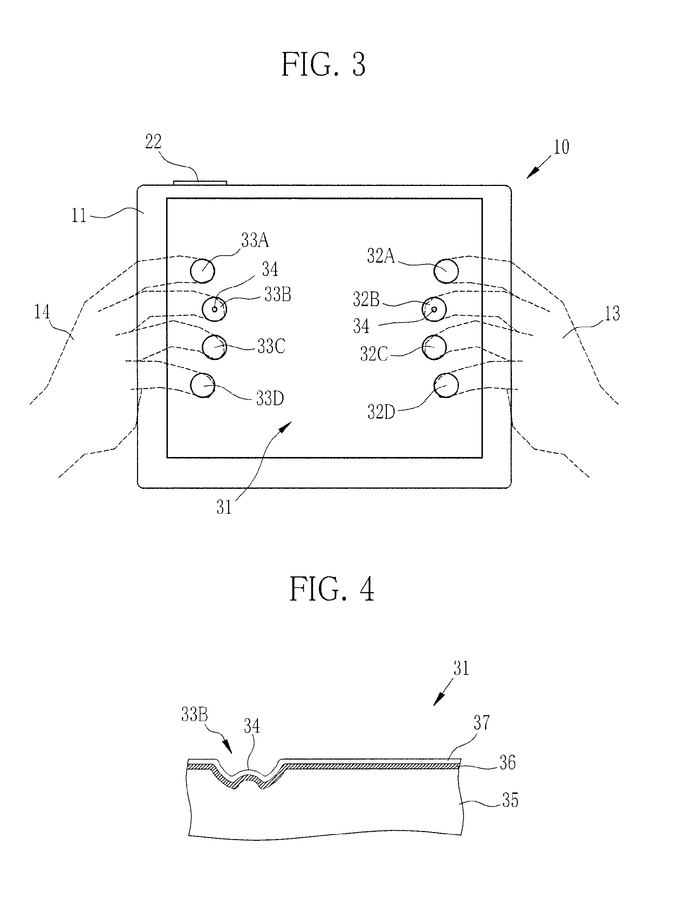

As illustrated in Fig.3, a touch sensor 31 is provided on the back face of the tablet terminal 10. In the touch sensor 31, plural recessed parts 32A-32D, 33A-33D are provided. The recessed parts 32A-32D are arranged in positions where the index finger, the middle finger, the third finger and the little finger of the left hand 13 which holds the tablet terminal 10 are in contact. The recessed parts 33A-33D are arranged in positions where the index finger, the middle finger, the third finger and the little finger of the right hand 14 which holds the tablet terminal 10 are in contact. To accommodate general lengths of the fingers of the left hand 13, the recessed parts 32A-32D are arranged in a curved line projecting from the left side face of the main body 11 toward the center of the touch sensor 31. In the same way, to accommodate general lengths of the fingers of the right hand 14, the recessed parts 33A-33D are arranged in a curved line projecting from the right side face of the main body 11 toward the center of the touch sensor 31. Accordingly, when the tablet terminal 10 is held with avoiding contact to the touch panel 12 on the front face, the fingers except the thumb of the left hand 13 and the right hand 14 come in contact with the recessed parts 32A-32D, 33A-33D naturally.

In addition, a projecting part 34 is provided on each of the center of the recessed part 32B where the middle finger of the left hand 13 comes in contact with and the center of the recessed part 33B where the middle finger of the right hand 14 comes in contact with. The projecting part 34 functions as an identification part which enables to identify whether the each finger except the thumb is on the predetermined position (home position) when the tablet terminal 10 is held with the left and right hands 13, 14. The projecting part 34 functions like projections provided on "F key" and "J key" of a keyboard attached to a general personal computer and "5 key" of a ten-key pad. Accordingly, by perceiving the projecting parts 34 by touch with the middle fingers of the left and right hands 13, 14, the reference positions of the fingers for holding the tablet terminal 10 (home position) can be distinguished without visual recognition of contact positions to the touch sensor 31.

The touch sensor 31 provided on the back face of the tablet terminal 10 does not have a display panel unlike the touch panel 12 on the front face. Therefore, as illustrated in Fig.4, a second sensor film 36 constituting the touch sensor 31 is provided for example on a housing 35 which forms the main body 11. A cover glass 37 is provided on the second sensor film 36. The recessed parts 32A-32D, 33A-33D and the projecting part 34 are formed in the housing 35, and the second sensor film 36 and the cover glass 37 are provided along the irregularity of the housing 35. The touch sensor 31 is of projection-capacitive type which enables multipoint detection, as same as the touch panel 12, and the second sensor film 36 is formed in the same way as the first sensor film 16 which forms the touch panel 12. The touch sensor 31 constitutes an operation section to operate the tablet terminal 10. In addition, although the first sensor film 16 forming the touch panel 12 and the second sensor film 36 forming the touch sensor 31 are separately provided in this embodiment, they may be formed integrally. The first and second sensor films 16, 36 can be formed from one sensor film, for example by bending one sensor film inside the tablet terminal 10, so that one end becomes the first sensor film 16 of the touch panel 12 and the other end becomes the second sensor film 36.

As illustrated in Fig.5, the tablet terminal 10 further includes a power source unit 41, a communication unit 42, a storage unit 43, a controller 44, and a RAM (Random Access Memory) 46. The power source unit 41 is activated by ON operation of the power button 22 to supply electricity from a battery or an external power source to each sections of the tablet terminal 10. The communication unit 42 communicates with a base station of telephone communication or a LAN (Local Area Network) by a wire or radio system.

The storage unit 43 is for example a nonvolatile memory or a magnetic memory device, and storages programs to be processed in the controller 44 and data to be used by each program (including images). Programs stored in the storage unit 43 are for example a control program 51 to control each sections of the tablet terminal 10, a mail program 52 to exchange electronic mails, a music playing program 53 to play music data, a web browser program 54 to access resources on the Internet, a game program 56 to functionalize the tablet terminal 10 as a game device, and so on. These programs can be arbitrarily installed and uninstalled by a user. Note that the storage unit 43 may have a constitution including an external storage medium such as a memory card and a reading station for reading programs or data from the external storage medium.

The controller 44 controls operations of each section of the tablet terminal 10 by executing the control program 51 and so on. Specifically, the controller 44 makes the display panel 15 display a GUI and so on according to the control program 51. In addition, by using contact detection signal which the touch panel 12 outputs from the first sensor film 16, the controller 44 detects a contact position of a hand or a finger on the touch panel 12, a change of the contact position, a contact time, an area of contact, a change from the contact state to non-contact state and so on (hereinafter simply referred to as contact). And in case a specific control is assigned by the control program 51 to a point where the contact is detected, the controller 44 executes the control.

For example, in case the controller 44 makes the display panel 15 display an icon (web browser icon) to which activation of the web browser program 54 is assigned according to the control program 51, when a user taps the display position of the web browser icon, the controller 44 detects the tap operation of the web browser icon by contact detection signal which the first sensor film 16 of the touch panel 12 output and activates the web browser program 54.

In the same way, the controller 44 detects a contact to the touch sensor 31 by using contact detection signal which the touch sensor 31 outputs from the second sensor film 36. And in case a specific control is assigned by the control program 51 to a point where the contact is detected, the controller 44 executes the control. However, when executing the control based on the contact to the touch sensor 31, the controller 44 executes the control assigned to the point where the contact is detected after detecting that the point where the contact is detected is changed to the non-contact state.

More specifically, at first the controller 44 detects contacts to the recessed parts 32A-32D, 33A-33D to which controls are assigned. However, the assigned controls are not executed at the time of detection of the contact. When the contact state of for example the recessed part 32A changes thereafter, the controller 44 judges that a user came in contact with the recessed part 32A for operation input, and executes the control assigned to the recessed part 32A where the contact state changed.

That is, when a user holds the tablet terminal 10, the fingers of the left hand 13 come in contact with the recessed parts 32A-32D, and the fingers of the right hand 14 come in contact with the recessed parts 33A-33D naturally. Accordingly, the controller 44 detects contacts to the recessed parts 32A-32D, 33A-33D to which controls are assigned. However, when a hand or a finger comes in contact with the touch sensor 31 only for holding the tablet terminal 10, the controller 44 does not recognize such a contact as an operation input through the touch sensor 31, and does not execute the control if it is assigned to the position where the contact is detected. After that, when it is detected an active operation input of the user, that is, the user changes the contact state into the non-contact state after having come in contact with the recessed parts 32A-32D and 33A-33D, the controller 44 executes the control assigned to the corresponding point.

The above-described operation at the time of the input through the touch sensor 31 mentioned is the same in case the controller 44 operates according to a program other than the control program 51, for example the mail program 52. Note that the RAM 46 is used as a temporary storage for temporarily storing a program which the controller44 executes, data which the controller 44 refers to, an operation result by the controller 44 and so on.

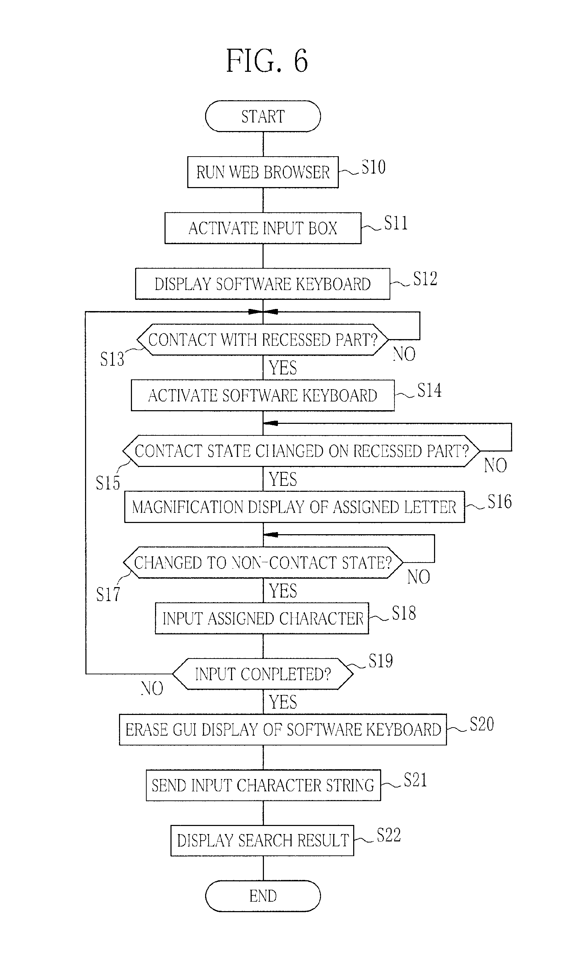

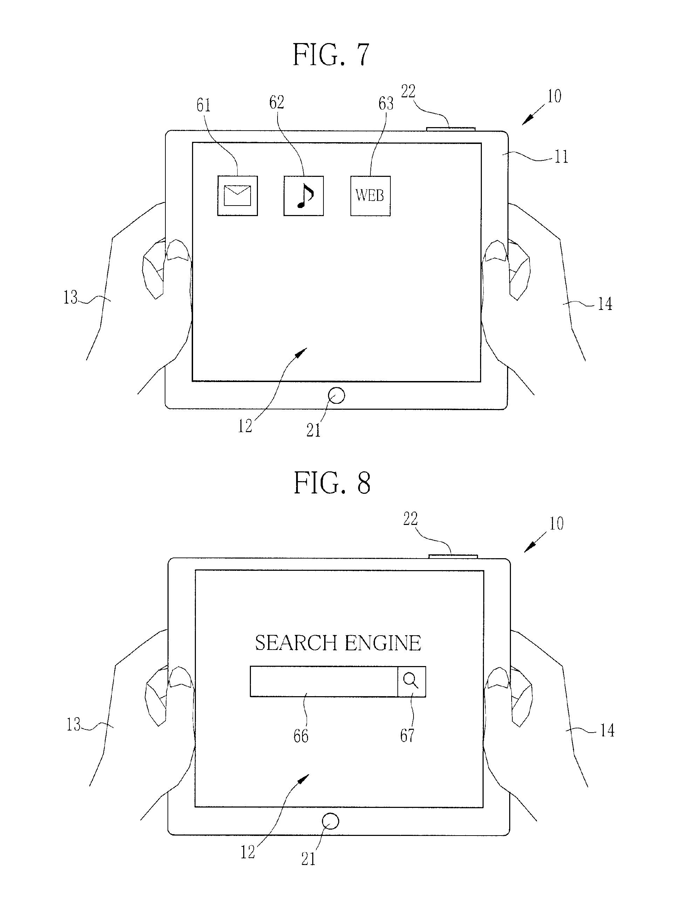

In the following, as an operation example of the tablet terminal 10, steps to input a character string into an input box, when using the web browser for performing retrieval through a search engine, will be explained with referring to a flow chart of Fig. 6. When the power supply of the tablet terminal 10 is turned off, the power button 22 is pressed to turn on the power supply. When the tablet terminal 10 is in a sleep mode, the power button 22 or the physical button 21 is pressed to cancel the sleep mode of the tablet terminal 10. After the activation of the tablet terminal 10, the controller 44 makes the touch panel 12 display a so-called home screen. As illustrated in Fig.7, on the home screen, a mail icon 61 to activate the mail program 52, a music program icon 62 to activate the music playing program 53 , a browser icon 63 to activate the web browser program 54 and so on are displayed.

When a user taps the browser icon 63 on the home screen, the touch panel 12 inputs a contact detection signal which indicates a contact position and a kind of contact (the tap in this case), to the controller 44. The controller44 detects that the contact to the touch panel 12 is the tap and that the tapped position is on the browser icon 63, by using the contact detection signal input from the touch panel 12. After detecting that the browser icon 63 was tapped, as illustrated in Fig.8, the controller 44 activates the web browser program 54 (step S10), and makes the touch panel 12 display the web browser which is the GUI of the web browser program 54. In this embodiment, for the web browser program 54 connecting to the search engine, an input box 66 to input a search word and a search button 67 to execute a search are displayed on the touch panel 12.

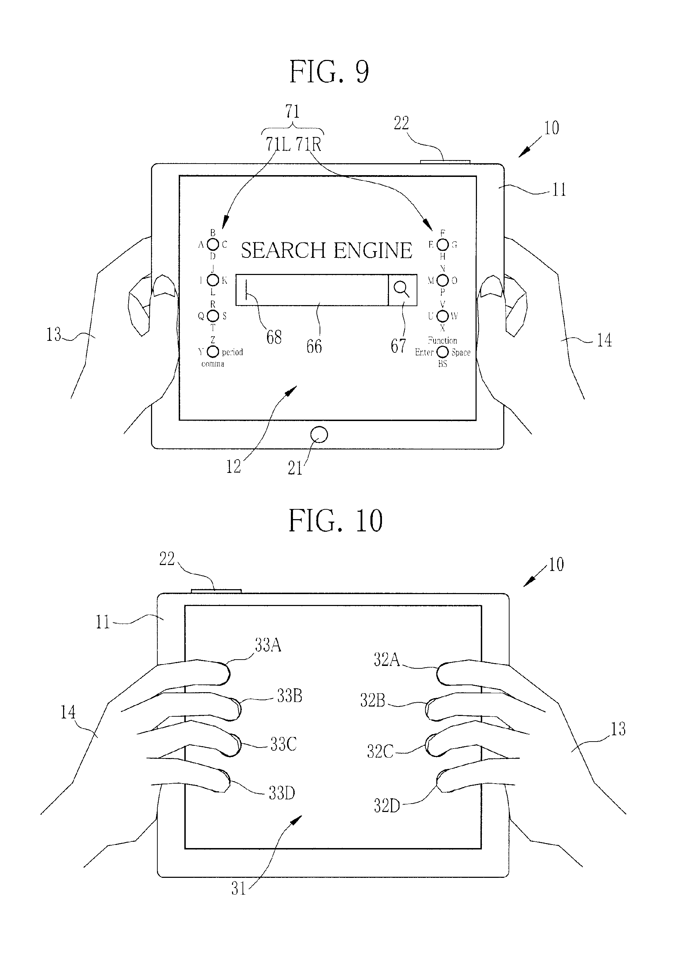

When the user taps the input box 66 thereafter, the controller 44 detects the tap by the contact detection signal from the touch panel 12. Then as illustrated in Fig.9, a cursor 68 indicating an input stand-by state of a character string (including symbols) blinks in the input box 66, and the input box 66 is activated in the state that letters can be entered in (step S11). Furthermore, by a request from the web browser program 54, the controller 44 displays on the web browser a software keyboard 71 which is a GUI to input a character string according to the control program 51 (step S12). The software keyboard 71 of the tablet terminal 10 has a first input section 71L and a second input section 71R. These are operational through the touch panel 12, but are operated mainly through the touch sensor 31 on the back face of the main body 11.

The first input section 71L has four graphical keys which respectively correspond to the recessed parts 32A-32D to which the each finger of the left hand 13 contacts. For example, in the touch sensor 31 on the back face, in a first left key corresponding to the recessed part 32A coming in contact with the index finger of the left hand 13, input of a letter "A" is assigned to a flick (a gesture sliding a finger on a touch position) to the left direction, input of a letter "B" is assigned to a flick to the upward direction, input of a letter "C" is assigned to a flick to the right direction, and input of a letter "D" is assigned to a flick to the downward direction. In the same way, in a second left key corresponding to the recessed part 32B, input of each letter "I" "J" "k" "L" is assigned to a flick of the each direction. In a third left key corresponding to the recessed part 32C, input of each letter "Q" "R" "S" "T" is assigned to the each direction. In a fourth left key corresponding to the recessed part 32D, input of each of "Y" "Z" "comma" "period" is assigned to the each direction.

Similarly, the second input section 71R has a first right key corresponding to the recessed part 33A coming in contact with the index finger of the right hand 14, a second right key corresponding to the recessed part 33B coming in contact with the middle finger, a third right key corresponding to the recessed part 33C coming in contact with the third finger, and a fourth right key corresponding to the recessed part 33D coming in contact with the little finger. In the first right key, input of each letter "E" "F" "G" "H" is assigned to a flick of the each direction. Input of each letter "M" "N" "O" "P" is assigned to the each direction in the second right key, and input of each letter "U" "V" "W" "X" is assigned to the each direction in the third right key. In the fourth right key, input of each of "Enter" "Function" "Space" "BS" (Back Space) is assigned to the each direction.

The controller 44 makes the first input section 71L for the left hand 13 be displayed on a position in the neighborhood of the corresponding position to the recessed parts 32A-32D with respect to the front and back faces of the main body 11, and never to be overlapped with the input box 66 the search button 67. In the same way, the controller 44 makes the second input section 71R for the right hand 14 be displayed on a position in the neighborhood of the corresponding position to the recessed parts 33A-33D with respect to the front and back faces of the main body 11, and never to be overlapped with the input box 66 the search button 67.

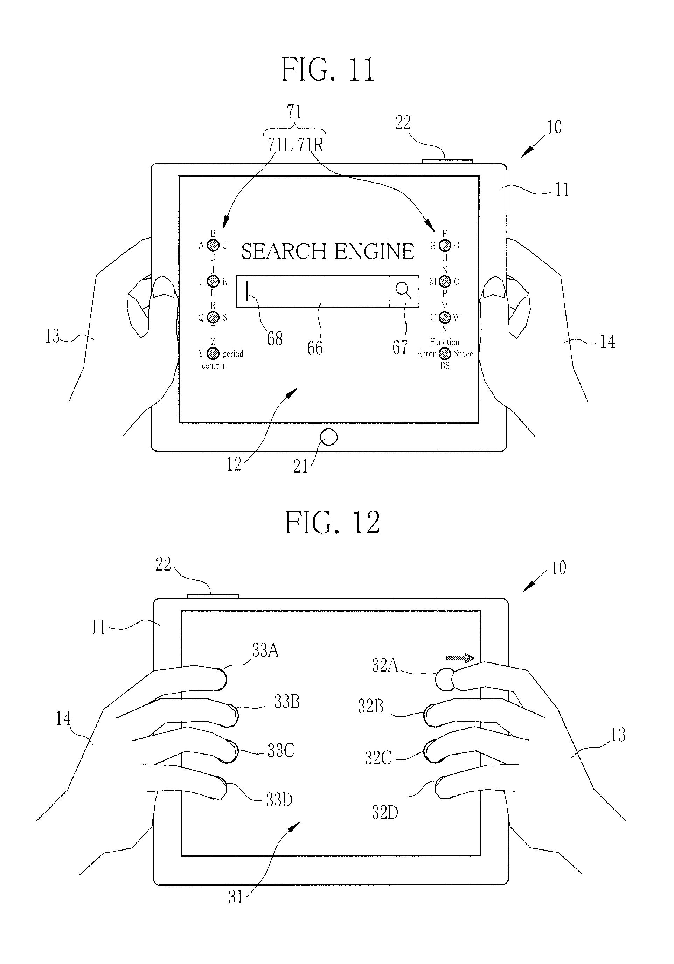

However, the input operation using the software keyboard 71 through the touch sensor 31 of the back face is invalidated in the initial state displayed on the touch panel 12. Then the controller 44 detects whether the recessed parts 32A-32D, 33A-33D are respectively contacted with the each finger of the left hand 13 and right hand 14, by using contact detection signal which the touch sensor 31 outputs (step S13) . As illustrated in Fig. 10, when the recessed parts 32A-32D, 33A-33D are touched by the fingers of the left hand 13 and right hand 14, the controller 44 activates the each key of the software keyboard 71, to enable the input operation using the software keyboard 71 through the touch sensor 31 of the back face (step S14). As illustrated in Fig.11, the controller 44 informs a user that the input operation using the software keyboard 71 through the touch sensor 31 of the back face became activated (enabled), for example by changing a color or the brightness of the each key of the software keyboard 71. Thereafter, the controller 44 monitors whether a contact state is changed on the each recessed part 32A-32D, 33A-33D, by using contact detection signal which the touch sensor 31 outputs (step S15).

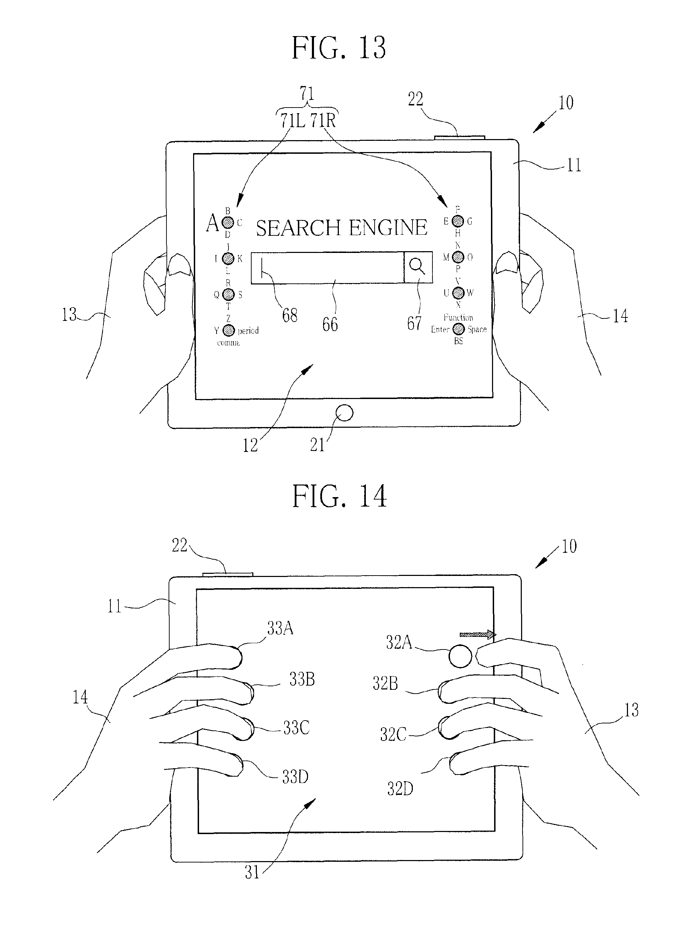

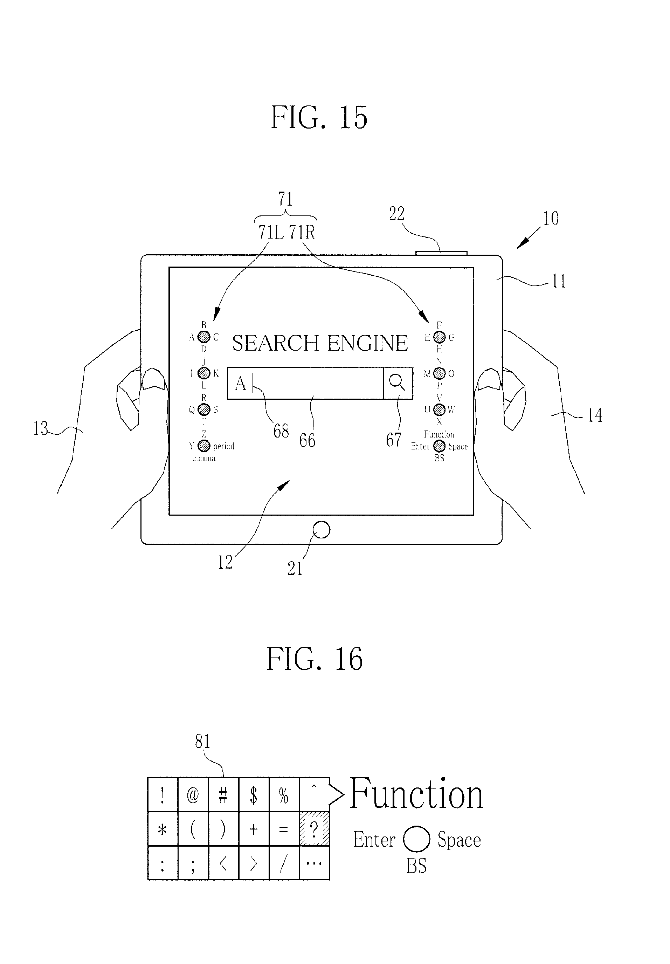

In the state that the input operation using the each key of the software keyboard 71 through the touch sensor 31 is activated, for example when the index finger of the left hand 13 is flicked from the position contacting with the recessed part 32A in the left side face direction of the main body 11 to change the contact state of the recessed part 32A as illustrated in Fig.12, the controller 44 make an enlarged letter "A" be displayed, which is assigned to the left side face direction of the first left key corresponding to the recessed part 32A as illustrated in Fig. 13 (step S16) . In this way, a letter to be input into the input box 66 by the operation of the user is informed to the user beforehand. After that, when it is detected that the recessed part 32A is changed into the non-contact state (step S17) by further sliding the index finger of the left hand 13 (or by releasing the index finger of the left hand 13 from the touch sensor 31) as illustrated in Fig.14, the controller 44 executes input control of the letter "A" assigned to the left side face direction of the first left key to the input box 66 (step S18) as illustrated in Fig.15.

Although the letter "A" is input here, other letters will be input in the same way. In addition, as illustrated in Fig.16, when the little finger of the right hand 14 is flicked from the recessed part 33D in the top face direction, enlarged letters "Function" is displayed as same as in case of other letters assigned to other keys, and a dialogue 81 to input symbols and letters which are not assigned to other keys is displayed. The user chooses one of symbols or others listed in the dialogue 81 by sliding the little finger of the right hand 14 in a neighborhood of the recessed part 33D. When it is detected that the recessed part 33D is changed into the non-contact state by releasing the little finger of the right hand 14 from the touch sensor 31, the controller 44 executes input control of the selected symbol or letter to the input box 66. In addition, when input operation of "BS" (Back Space) is carried out, one letter (or symbol) which have been already input into the input box 66 is deleted.

Input operation of a character string using the software keyboard 71 through the touch sensor 31 of the back face is performed repeatedly until input of the character string to be searched is completed (step S19). When the user taps the search button 67 through the touch panel 12 or inputs "Enter" through the touch sensor 31 of the back face to complete input of the character string to the input box 66, the controller44 deletes the GUI display of the software keyboard 71 (step S20), and transmits the character string input into the input box 66 by the web browser program 54 to the search engine through the communication unit 42 (step S21) . Then the controller 44 displays the search results from the search engine on the touch panel 12 by the web browser program 54 (step S22).

As described above, the tablet terminal 10 detects a contact to the touch sensor 31 and executes control assigned to a point where the contact is detected after the point where the contact is detected is changed to the non-contact state. Accordingly, unless the user clearly shows the intension for input by the active operation, that is, the user contacts the recessed parts 32A-32D and 33A-33D and then releases the fingers from the recessed parts 32A-32D and 33A-33D, the controller 44 does not execute the control assigned to the corresponding point only by continuously touching the touch sensor 31 to hold the tablet terminal 10. Therefore, it is easy to use the tablet terminal 10 since the touch sensor 31 is provided on the back face to improve operability with preventing malfunctions.

In addition, since input through the touch sensor 31 of the back face is not enabled unless the user makes the operation with a clear intention as described above, input operation through the touch sensor 31 can be performed with holding the tablet terminal 10 surely. For example, in a conventional electronic apparatus which merely provides a touch sensor in the back face, a contact itself to the back face works as an input operation. Accordingly, since hands or fingers should be away from the back face for an input operation through the touch sensor of the back face, its hold ability becomes not good. Especially, in case a touch panel is provided on the front face, since hands and fingers should be apart from both the touch panel of the front face and the touch sensor of the back face, it is easy to drop the apparatus. In contrast, in the tablet terminal 10 of the present invention, not only malfunction is prevented, but also the input operation can be performed with holding the tablet surely.

In the above embodiment, the search through the search engine is performed by the web browser program 54. However, an input operation through the touch sensor 31 of the back face is also available for other programs. Although in the above embodiment, contact to the recessed parts 32A-32D, 33A-33D correspond to input operation through the software keyboard 71 so as to input a character string. However, control to be assigned to contact to the recessed parts 32A-32D, 33A-33D varies according to an activated program. For example, when the game program 56 is activated, cross key function to input a direction of movement or a button function to use or change an item may be assigned to the recessed parts 32A-32D, 33A-33D. Note that in case the touch panel 12 of the front face is used for an input operation for the game program 56, a user may lose sight of a place of an operation key by getting absorbed in the game. However, in case the touch sensor 31 of the back face is used for an input operation, since location of operation keys becomes easy to find by there being the recessed part 32A-32D, 33A-33D, it can reduce stress of the user, in addition to prevent a miss input.

In the above embodiment, control is assigned to the each of the recessed parts 32A-32D, 33A-33D. However, in the recessed parts 32A-32D, 33A-33D, there may be the recessed part to which no control by a contact is assigned.

Note that in the above embodiment, an activation is performed for the each key such that a color or the brightness of the key corresponding to the contacted recessed part changes when one of the recessed parts 32A-32D, 33A-33D is contacted. However, the software keyboard 71 may be activated when at least two or all of the recessed parts 32A-32D, 33A-33D are contacted as a trigger. In other words, contacts to plural points of the touch sensor 31 are detected, and after at least one of the points is changed to the non-contact state, control assigned to the point where the non-contact state is detected is executed. In this constitution, since input operation through the touch sensor 31 is not available unless a user makes an explicit action that the user comes in contact with the plural recessed part, it can prevent malfunction by a contact to the touch sensor 31 more surely.

In addition, in case the contact to the plural recessed parts of the touch sensor 31 is the trigger for activating operation input as described above, it is preferable that control assigned to the recessed part where the non-contact state is detected is executed after at least one of the recessed parts where the contact is detected is changed to the non-contact state while the other recessed parts is kept in the contact state. In this way, even if positions of the hands or the fingers holding the tablet terminal 10 are changed without intention, and some of the recessed parts 32A-32D, 33A-33D are changed in non-contact state, erroneous input can be prevented.

In the above embodiment, in addition to the touch panel 12 on the front face, the touch sensor 31 on the back face is provided. However, instead of the touch sensor 31 on the back face, a touch sensor corresponding to the touch sensor 31 of the above embodiment may be provided on at least one of the side faces (the right side face, the left side face, the top face, the bottom face) of the main body 11. Of course a touch sensor may be provided in at least one of the side faces of the main body 11 in addition to the touch sensor 31 on the back face.

In the above embodiment, the tablet terminal 10 is held to be laterally long. However, the tablet terminal 10 may be held to be vertically long. In the above embodiment, the recessed parts 32A-32D, 33A-33D are arranged suitable for holding the tablet terminal 10 to be laterally long. However, in case the tablet terminal 10 is held to be vertically long, it is preferable that the recessed parts 32A-32D, 33A-33D are arranged suitable for holding the tablet terminal 10 to be vertically long. In case the tablet terminal 10 is held both to be laterally long and to be vertically long, it is preferable that recessed parts used when holding the tablet terminal 10 to be vertically long, in addition to the recessed parts 32A-32D, 33A-33D which are used when holding the tablet terminal 10 to be laterally long. In addition, although the tablet terminal 10 are held with both hands in the above embodiment, the tablet terminal 10 may be held with one hand. In this case, it is preferable that input operation through either the recessed parts 32A-32D for the left hand 13 or the recessed parts 33A-33D for the right hand 14 is enabled according to setting.

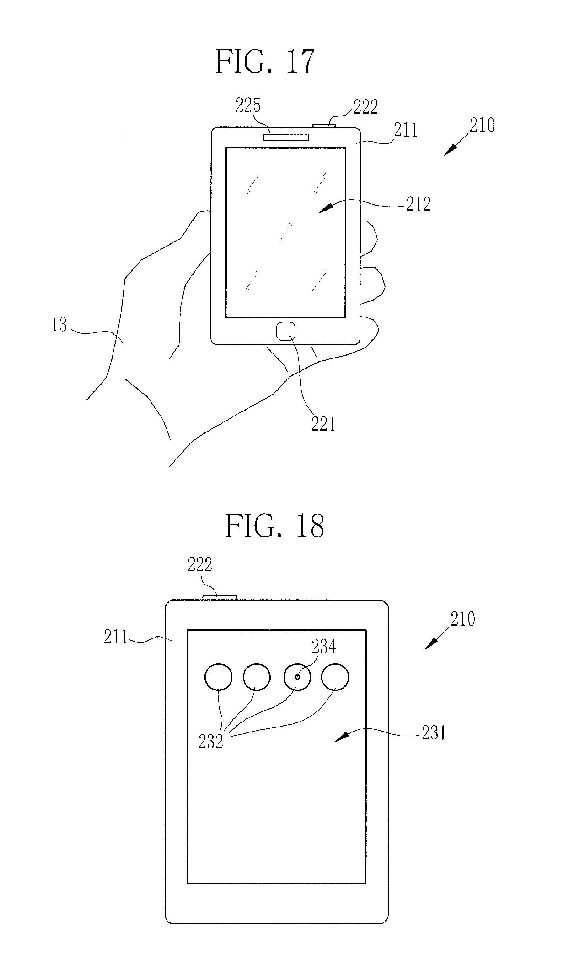

For example, a smartphone 210 is a vertically long device as illustrated in Fig.17. The smartphone 210 comprises a touch panel 212 on the front face of a main body 211 like the tablet terminal 10, a physical button 221 at the bottom face side of the front face, a power button 222 in the top face of the main body 211, and a speaker 225 for calls at the top face side of the front face. In addition, the smartphone 210 is smaller than the tablet terminal 10 and is mainly held with one hand. For example, in case the smartphone 210 is held by the left hand 13, the left side face of the smartphone 210 is supported with the thumb of the left hand 13, and the right side face is supported with the middle finger, the third finger and the little finger of the left hand 13. Accordingly, the index finger of the left hand 13 can touch the back face of the smartphone 210, with avoiding a contact to the touch panel 212.

As illustrated in Fig. 18, in the back face of the smartphone 210 which is vertically long, a touch sensor 231 is provided as same as in the tablet terminal 10, and the touch sensor 231 has plural recessed parts 232 where control is assigned to. However, the plural recessed parts 232 are arranged in the top face side of the touch sensor 231, in an area where the index finger of the left hand 13 (or the right hand 14) can touch in when the smartphone 210 is held to be vertically long. One of the plural recessed parts 232 is provided with a projecting part 234, which functions as an identification part which enables to identify the home position.

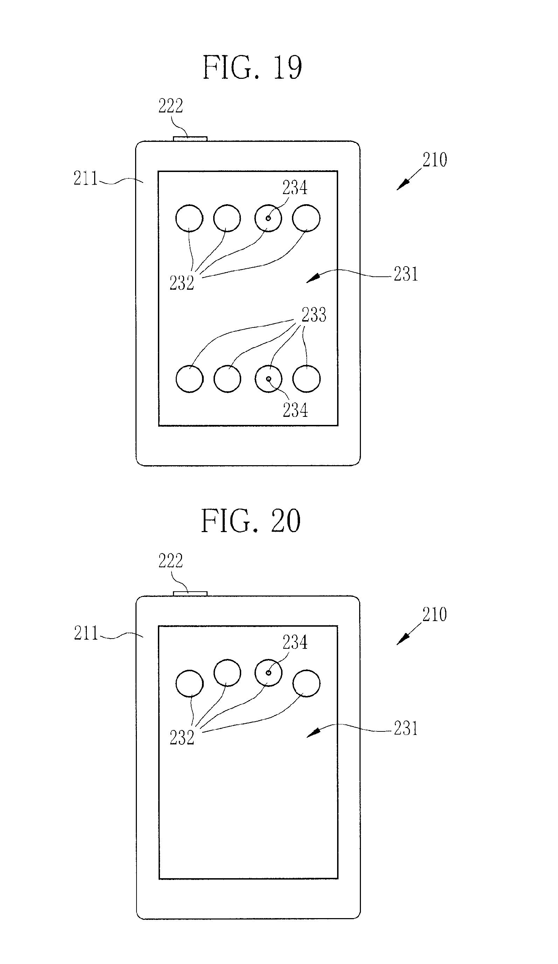

In case of a vertically long device such as the smartphone 210 which is held by one hand, the plural recessed parts 232 provided in the touch sensor 231 on the back face are required to be arranged in an area where a finger for touching the touch sensor 231 for input operation can be reached as described above, but it is not necessarily necessary to provide them in two places of right and left (or top and bottom) of the touch sensor 31, like the recessed parts 32A-32D for the left hand and the recessed parts 33A-33D for the right hand in the tablet terminal 10. Of course, as illustrated in Fig. 19, the plural recessed parts 232 and plural recessed parts 233 may be provided for the top face side and the bottom face side of the touch sensor 231 respectively, so that the smartphone 210 can be operated as same as the tablet terminal 10 when the smartphone 210 is held by both hands to be laterally long. In some game programs carried out in the smartphone 210, the smartphone 210 should be held to be laterally long. Therefore, even in case of the smartphone 210 which is basically held by one hand to be vertically long, it is preferable to arrange recessed parts like the tablet terminal 10 as illustrated in Fig.19.

Note that in Fig.18, the plural recessed parts 232 are arranged in a linear shape in a shorter side direction of the smartphone 210. However, in case of the smartphone 210, as illustrated in Fig.20, it is preferable that the recessed parts 232 are arranged in a curved line recessed from the side faces of the main body 211 toward the center of the touch sensor 231 (projecting toward the top face side). Accordingly, the plural recessed parts 232 are arranged along the trace of the index finger of the left hand 13 (or the right hand14) for touching the touch sensor 231, for easy use. In addition, the number of the recessed parts provided in the touch sensor 231 is arbitrary. However, considering a case that the smartphone 210 is held to be laterally long, it is preferable that at least four recessed parts 232 are provided as a group like in the tablet terminal 10, as illustrated in Fig.18.

In the above embodiments, the recessed parts 32A-32D, 33A-33D are provided in the touch sensor 31 of the back face. However, projecting parts may be provided in substitution for the recessed parts. That is, the shape is arbitrary as long as contact positions can be distinguished just by holding the tablet terminal 10 without visual recognition of the back face. In addition, a part of the recessed parts may be changed to a projecting part. Similarly, regarding the projecting part 34 which functions as the identification part which enables to identify the home position, its shape is arbitrary as long as the home position can be distinguished, and a recessed part may be provided in substitution for the projecting part. Furthermore, although the recessed parts 32A-32D, 33A-33D improve operability, the recessed parts 32A-32D, 33A-33D may be omitted.

The projecting part 34 to distinguish the home position may be provided in at least one of the recessed parts 32A-32D, 33A-33D. However, in case there are the group of the recessed parts 32A-32D for the left hand 13 and the group of the recessed parts 33A-33D for the right hand 14 like the above embodiment, it is preferable that the projecting part 34 is provided in at least one of the recessed parts 32A-32D for the left hand 13, and in at least one of the recessed parts 33A-33D for the right hand 14. Accordingly, the home position can be surely distinguished by the each hand 13, 14.

In addition, the present invention is suitable for an electronic apparatus having a touch sensor on the back face and a screen on the front face, and is especially suitable for an electronic apparatus in which a screen on the front face is a touch panel, as well as the tablet terminal 10 and the smartphone 210. For example, the present invention is suitable for a cellular telephone, a PDA (Personal Digital Assistant), a portable navigation device, a personal computer, a game device and so on.

Various changes and modifications are possible in the present invention and may be understood to be within the present invention.

## Claims

1. An electronic apparatus (10,210) comprising:
a display (12,212) which displays a screen on a front face of a main body (11,211);
a touch sensor (31,231) provided at a back face or a side face of the main body; and
a controller (44) which detects a contact to the touch sensor using a contact detection signal which the touch sensor outputs and executes control assigned to a point where the contact is detected after the point where the contact is detected is changed to a non-contact state.

2. The electronic apparatus according to claim 1, wherein the controller detects contacts to plural points of the touch sensor, and executes control assigned to the point where the non-contact state is detected after at least one of the points is changed to the non-contact state.

3. The electronic apparatus according to claim 1, wherein the controller executes control assigned to the point where the non-contact state is detected after at least one of the points where the contact is detected is changed to the non-contact state while the other points is kept in the contact state.

4. The electronic apparatus according to one of claims 1 to 3, wherein the touch sensor includes a recessed part or a projecting part (32,33,232,233) to which control is assigned.

5. The electronic apparatus according to claim 4, wherein the touch sensor has the plurality of recessed parts or projecting parts, and provides an identification part (34,234) to identify a reference position to at least one of the recessed parts or projecting parts.

6. The electronic apparatus according to claim 5, wherein the touch sensor includes the plurality of recessed parts or projecting parts to which one hand or finger which holds the main body contacts and the plurality of recessed parts or projecting parts to which another hand or finger which holds the main body contacts, wherein at least one of the recessed parts or projecting parts to which one hand or finger contacts is provided with the identification part and at least one of the recessed parts or projecting parts to which another hand or finger contacts is provided with the identification part.

7. The electronic apparatus according to one of claims 4 to 6, wherein the touch sensor has the plurality of recessed parts or projecting parts which are arranged in a curved line projecting or recessed from a side face of the main body toward the center of the touch sensor.

8. The electronic apparatus according to one of claims 1 to 7, wherein the controller executes input control of a letter or symbol.

9. The electronic apparatus according to one of claims 1 to 7, wherein the controller controls the display to display a graphical user interface indicating control to be executed.

10. The electronic apparatus according to claim 9, wherein the controller notices through the graphical user interface that control assigned to the contacted point is executable, after detecting a contact to the touch sensor.

11. An operation method of an electronic apparatus (10 , 210), in which the electronic apparatus has a display (12,212) which displays a screen on a front face of a main body (11,211) and a touch sensor (31,231) provided at a back face or a side face of the main body, the operation method comprising steps of:
detecting a contact to the touch sensor using a contact detection signal which the touch sensor outputs; and
executing control assigned to a point where the contact is detected after the point where the contact is detected is changed to a non-contact state.
